# EUROPEAN PATENT APPLICATION

(11) **EP 3 970 917 A1**
(43) Date of publication of application: **23.03.2022**
(21) Application number: 20208752.4
(22) Date of filing: 19.11.2020
(51) Int. Cl.: B25F 5/00

(54) **GAPLESS SPINDLE LOCKING DEVICE OF IMPROVED STRUCTURE**

(30) Priority: 17.09.2020 CN 202010981212
(71) Applicant: Best select Industrial (SuZhou) Co., Ltd, Suzhou, Jiangsu 215000 (CN)
(72) Inventor: WANG, QIANG, Suzhou City, Jiangsu 215000 (CN); JEN, HSI-JEN, Suzhou City, Jiangsu 215000 (CN); HUANG, ZONGPING, Suzhou City, Jiangsu 215000 (CN)
(74) Representative: ZHAOffice SPRL

(57) **Abstract**

A gapless spindle locking device of an improved structure comprises an output shaft (1), a power output disk (2), a stop ring (3) and lock pins (4), wherein the power output disk (2) is connected to a driving device, a polyhedral shaft (11) is disposed at one end of the output shaft (1) and has a lock section (1a) and a power transmission section (1b), and lock planes (1c) matched with the lock pins (4) are disposed on the lock section (1a) in a circumferential direction; a driving structure (2a) for transmitting power is disposed on the power output disk (2), a driven structure (2b) for transmitting power is disposed on the power transmission section (1b), and the driving structure (2a) is matched with the driven structure (2b); spacing pillars (5) protruding upwards are disposed on a surface of the power output disk (2) in a circumferential direction, a damping block (6) is disposed between every two adjacent spacing pillars (5), the lock pins (4) are disposed between the spacing pillars (5) and the damping blocks (6), the polyhedral shaft (11) penetrates through a center hole (21) defined by the spacing pillars (5), the damping blocks (6) and the lock pins (4), as well as the power output disk (2), and the lock pins (4) contact with the lock planes (1c). The gapless spindle locking device can effectively lower noises caused by a sudden stop and reduce the locking angle of the output shaft and is high in locking reliability, and the assembly difficulty of the whole structure is low.

## Description

### Technical Field

The invention relates to the technical field of electric tools, in particular to a gapless spindle locking device of an improved structure.

### Description of Related Art

Electric tools, including pluggable electric tools, rechargeable electric tools as well as rechargeable and pluggable electric tools, are electrically driven to clamp drill bits to drill holes or clamp screwdrivers to assemble and disassemble screws. Sometimes, the rechargeable electric tools may fail to drive the drill bits or screwdrivers to rotate in case of a power shortage and cannot be immediately charged for use. When the pluggable drill bits cannot be used in case of a sudden power failure, such electric tools have to be used as hand drills.

Because the electric tools are driven in such a manner that a driving gear combined with a motor driving shaft is directly engaged with a gear set which is engaged with a power output disk of a spindle, when the electric tools used as hand drills are rotated by force, the drill bits or screwdrivers may idle in situ due to the fact that the driving gear, combined with the motor driving shaft through the gear set, of the power output disk rotates to play a role as a "drive gear". To solve this problem, a plurality of rollers are disposed on the inner circle of a fixed ring to contact with the side face of the spindle, so that when the spindle operates actively while power output is stopped, the spindle drives the rollers to abut against the fixed ring to be locked. However, by adoption of this structure, it cannot be guaranteed that all the rollers are stressed uniformly due to machining precision errors of the spindle and concentric assembly errors of the spindle and the fixed ring, the locking reliability is low, and noises may be made due to impacts of the spindle and the rollers under the inertia effect when a gearbox stops suddenly.

To solve the problem of noises, Taiwan Patent M383473 provides a gapless spindle locking device of an improved structure, which is mainly characterized in that an elastic retaining mechanism is disposed on an inner circle of a fixed ring, an elastic part capable of elastically deforming is disposed in a radial direction of balls, and buffer force is provided by means of elastic deformation of the elastic part to eliminate noises. However, such a structure is complicated and has high assembly requirements, and the reliability will be reduced when plastic deformation happens to the elastic part due to fatigues or other factors in use.

German Invention Patent DE102006012963B4 discloses a locking device for an output shaft of an electric tool, which comprises a stopper, a power output disk, an insertion part and a stop ring, wherein when rotating forward under the effect of a force, the power output disk acts on the output shaft to enable the output shaft to rotate synchronously; when rotating reversely under the effect of a force, the output shaft drives the stopper to deflect to enable lock pins to abut against limit parts, so that the displacement of the lock pins is limited; then the stopper is locked on the output shaft by the lock pins, and after that, manual operation can be performed. According to the technical solution of this invention patent, the lock face and the drive face of the output shaft are located on the same circumferential face, so that it is difficult to dispose a buffer structure.

### Brief Summary of the Invention

The main objective of the invention is to overcome the defects of the prior art by providing a gapless spindle locking device of an improved structure.

To fulfill the aforesaid objective, the invention adopts the following technical solution:
A gapless spindle locking device of an improved structure comprises an output shaft, a power output disk, a stop ring and lock pins, wherein the power output disk is connected to a driving device, a polyhedral shaft is disposed at one end of the output shaft and has a lock section and a power transmission section, and lock planes matched with the lock pins are disposed on the lock section in a circumferential direction; a driving structure for transmitting power is disposed on the power output disk, a driven structure for transmitting power is disposed on the power transmission section, and the driving structure is matched with the driven structure; spacing pillars protruding upwards are disposed on a surface of the power output disk in a circumferential direction, a damping block is disposed between every two adjacent spacing pillars, the lock pins are disposed between the spacing pillars and the damping blocks, the stop ring is disposed on the power output disk, and the spacing pillars, the damping blocks and the lock pins are disposed in an inner circle of the stop ring in a sleeved manner; the polyhedral shaft penetrates through a center hole defined by the spacing pillars, the damping blocks and the lock pins, as well as the power output disk, and the lock pins contact with the lock planes.

A through hole is formed in the center of the power output disk, the driving structure comprises ribs disposed on an inner wall of the through hole, the driven structure comprises grooves formed in the power transmission section in a circumferential direction, and the ribs are embedded in the grooves.

A polygonal through hole is formed in the center of the power output disk, and the power transmission section serves as the polyhedral shaft and is inserted into the polygonal through hole, wherein the driving structure has two V-shaped driving faces disposed in the polygonal through hole, an arc transition face is disposed between the two adjacent V-shaped driving faces, the driven structure has two transmission planes disposed on the power transmission section in a circumferential direction, an arc transition face is disposed between the two adjacent transmission planes, and the V-shaped driving faces contact with the transmission planes.

A polygonal through hole is formed in the center of the power output disk, and the power transmission section serves as the polyhedral shaft and is inserted into the polygonal through hole, wherein the driving structure has three V-shaped driving faces disposed in the polygonal through hole, an arc transition face is disposed between every two adjacent V-shaped driving faces, the driven structure has three transmission planes disposed on the power transmission section in a circumferential direction, an arc transition face is disposed between every two adjacent transmission planes, and the V-shaped driving faces contact with the transmission planes.

A polygonal through hole is formed in the center of the power output disk, and the power transmission section serves as the polyhedral shaft and is inserted into the polygonal through hole, wherein the driving structure has four V-shaped transmission planes disposed in the polygonal through hole, an arc transition face is disposed between the two adjacent transmission planes, the driven structure has four V-shaped driving faces disposed on the power transmission section in a circumferential direction, an arc transition face is disposed between every two adjacent V-shaped driving faces, and the V-shaped driving faces contact with the transmission planes.

A D-shaped through hole is formed in the center of the power output disk, and the power transmission section has a D-shaped cross-section and is inserted into the D-shaped through hole, wherein the driving structure has a V-shaped driving face disposed in the D-shaped through hole, the V-shaped driving face is connected to an arc transition face, the driven structure has a transmission plane disposed on the power transmission section in a circumferential direction, the transmission plane is connected to an arc transition face, and the V-shaped driving face contacts with the transmission plane.

A connecting pillar is disposed on a surface, connected to the driving device, of the power output disk.

Second insertion holes are formed in the power output disk, and the spacing pillars are cylinders and are inserted and fixed in the second insertion holes.

The spacing pillars are integrated with the power output disk.

Compared with the prior art, the invention has the following beneficial effects:
When rotating, the power output disk drives the output shaft to rotate to output torque, and at the same time, the spacing pillars of the power output disk push the lock pins and the damping blocks to rotate synchronously; when a gearbox stops suddenly, the damping blocks push the lock pins out of the center of the lock planes of the output shaft, so that the gaps between the lock pins and the polyhedral shaft sleeve as well as between the lock pins and the stop ring are very small to ensure that the output shaft can stop rotating within an extremely short time, noises caused by a sudden stop can be effectively lowered, the locking angle of the output shaft is reduced, the locking reliability is high, and the assembly difficulty of the whole structure is low.

The invention further provides another gapless spindle locking device of an improved structure, which comprises an output shaft, a power output disk, a stop ring and lock pins, wherein the power output disk is connected to a driving device, a polyhedral shaft sleeve is disposed around one end of the output shaft and has a lock section and a power transmission section, and lock planes matched with the lock pins are disposed on the lock section in a circumferential direction; a driving structure for transmitting power is disposed on the power output disk, a driven structure for transmitting power is disposed on the power transmission section, and the driving structure is matched with the driven structure; spacing pillars protruding upwards are disposed on a surface of the power output disk in a circumferential direction, a damping block is disposed between every two adjacent spacing pillars, the lock pins are disposed between the spacing pillars and the damping blocks, and the spacing pillars, the damping blocks and the lock pins are disposed in an inner circle of the stop ring in a sleeved manner; the polyhedral shaft sleeve penetrates through a center hole defined by the spacing pillars, the damping blocks and the lock pins, as well as the power output disk, and the lock pins contact with the lock planes.

A polyhedral shaft is disposed at one end of the output shaft, and an inner cavity of the polyhedral shaft sleeve is matched with the polyhedral shaft.

A through hole is formed in the center of the power output disk, the driving structure comprises ribs disposed on an inner wall of the through hole, the driven structure comprises grooves formed in the power transmission section in a circumferential direction, and the ribs are embedded in the grooves.

A polygonal through hole is formed in the center of the power output disk, and the power transmission section has multiple connecting faces and is inserted into the polygonal through hole, wherein the driving structure has two V-shaped driving faces disposed in the polygonal through hole, an arc transition face is disposed between the two adjacent V-shaped driving faces, the driven structure has two transmission planes disposed on the power transmission section in a circumferential direction, an arc transition face is disposed between the two adjacent transmission planes, and the V-shaped driving faces contact with the transmission planes.

A polygonal through hole is formed in the center of the power output disk, and the power transmission section has multiple connecting faces and is inserted into the polygonal through hole, wherein the driving structure has three V-shaped driving faces disposed in the polygonal through hole, an arc transition face is disposed between every two adjacent V-shaped driving faces, the driven structure has three transmission planes disposed on the power transmission section in a circumferential direction, an arc transition face is disposed between every two adjacent transmission planes, and the V-shaped driving faces contact with the transmission planes.

A polygonal through hole is formed in the center of the power output disk, and the power transmission section has multiple connecting faces and is inserted into the polygonal through hole, wherein the driving structure has four V-shaped transmission planes disposed in the polygonal through hole, an arc transition face is disposed between every two adjacent transmission planes, the driven structure has four V-shaped driving faces disposed on the power transmission section in a circumferential direction, an arc transition face is disposed between every two adjacent V-shaped driving faces, and the V-shaped driving faces contact with the transmission planes.

A D-shaped through hole is formed in the center of the power output disk, and the power transmission section has a D-shaped cross-section and is inserted into the polygonal through hole, wherein the driving structure has a V-shaped driving face disposed in the D-shaped through hole, the V-shaped driving face is connected to an arc transition face, the driven structure has a transmission plane disposed on the power transmission section in a circumferential direction, the transmission plane is connected to an arc transition face, and the V-shaped driving face contacts with the transmission plane.

A connecting pillar is disposed on a surface, connected to the driving device, of the power output disk.

Second insertion holes are formed in the power output disk, and the spacing pillars are cylinders and are inserted and fixed in the second insertion holes.

The spacing pillars are integrated with the power output disk.

Compared with the prior art, the invention has the following beneficial effects:
When rotating, the power output disk drives the output shaft to rotate to output torque, and at the same time, the spacing pillars of the power output disk push the lock pins and the damping blocks to rotate synchronously; when a gearbox stops suddenly, the damping blocks push the lock pins out of the center of the lock planes of the output shaft, so that the gaps between the lock pins and the polyhedral shaft sleeve as well as between the lock pins and the stop ring are very small to ensure that the output shaft can stop rotating within an extremely short time, noises caused by a sudden stop can be effectively lowered, the locking angle of the output shaft is reduced, the locking reliability is high, and the assembly difficulty of the whole structure is low.

### Brief Description of the Several Views of the Drawings

FIG. 1 is a structural view of the invention;
FIG. 2 is an exploded view of Embodiment 1 of the invention;
FIG. 3 is an exploded view of Embodiment 2 of the invention;
FIG. 4 is an exploded view of Embodiment 3 of the invention;
FIG. 5 is an exploded view of Embodiment 4 of the invention;
FIG. 6 is an exploded view of Embodiment 5 of the invention;
FIG. 7 is an exploded view of Embodiment 6 of the invention;
FIG. 8 is an exploded view of Embodiment 7 of the invention;
FIG. 9 is an exploded view of Embodiment 8 of the invention;
FIG. 10 is an exploded view of Embodiment 9 of the invention;
FIG. 11 is an exploded view of Embodiment 10 of the invention.

### Detailed Description of the Invention

The technical solutions of the embodiments of the invention will be clearly and completely described below in conjunction with the accompanying drawings of these embodiments. Obviously, the embodiments in the following description are merely illustrative ones, and not all possible ones of the invention. All other embodiments obtained by those ordinarily skilled in the art based on the following ones without creative labor should also fall within the protection scope of the invention.

### Embodiment 1

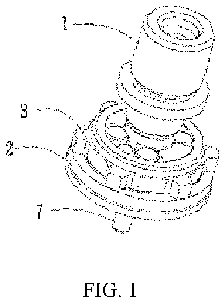

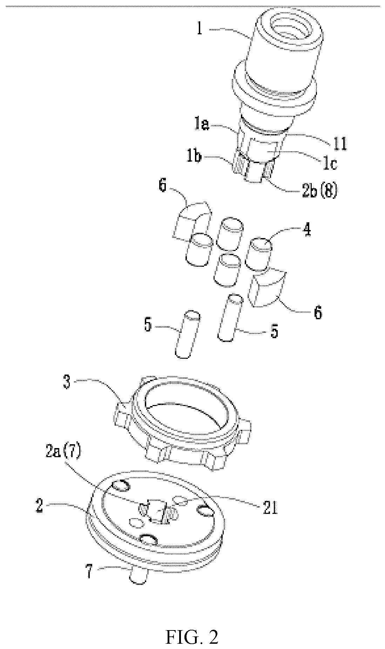

As shown in FIG. 1 and FIG. 2, a gapless spindle locking device of an improved structure comprises an output shaft 1, a power output disk 2, a stop ring 3 and lock pins 4, wherein the power output disk 2 is connected to a driving device, a polyhedral shaft 11 is disposed at one end of the output shaft 1 and has a lock section 1a and a power transmission section 1b, and lock planes 1c matched with the lock pins 4 are disposed on the lock section 1a in a circumferential direction; a driving structure 2a for transmitting power is disposed on the power output disk 2, a driven structure 2b for transmitting power is disposed on the power transmission section 1b, and the driving structure 2a is matched with the driven structure 2b; spacing pillars 5 protruding upwards are disposed on a surface of the power output disk 2 in a circumferential direction, a damping block 6 is disposed between every two adjacent spacing pillars 5, the lock pins 4 are disposed between the spacing pillars 5 and the damping blocks 6, the stop ring 3 is disposed on the power output disk 2, and the spacing pillars 5, the damping blocks 6 and the lock pins 4 are disposed in an inner circle of the stop ring 3 in a sleeved manner; the polyhedral shaft 11 penetrates through a center hole defined by the spacing pillars 6, the damping blocks 6 and the lock pins 4, as well as the power output disk 2, and the lock pins 4 contact with the lock planes 1c.

In this embodiment, a through hole 21 is formed in the center of the power output disk 2, the driving structure 2a comprises ribs 7 disposed on an inner wall of the through hole 21, the driven structure 2b comprises grooves 8 formed in the power transmission section 1b in a circumferential direction, and the ribs 7 are embedded in the grooves 8. When the power output disk 2 rotates, power is transmitted by means of the ribs 7 and the grooves 8 to drive the output shaft 1 to rotate.

A connecting pillar 7 is disposed on a surface, connected to the driving device, of the power output disk 2. The connecting pillar 7 is integrated with the power output disk 2; or, an insertion hole is formed in the power output disk 2, and the connecting pillar 7 is inserted into the insertion hole to be fixed.

The spacing pillars 5 are integrated with the power output disk 2; or, insertion holes are formed in the power output disk 2, and the spacing pillars 5 are inserted into the insertion holes to be fixed.

Quick locking principle: when a gearbox stops suddenly, the damping blocks 6 push the lock pins 4 out of the center of the lock planes 1c of the output shaft 1, so that the gaps between the lock pins 4 and the polyhedral shaft 11 as well as between the lock pins 4 and the stop ring 3 are very small to ensure that the output shaft 1 can stop rotating within an extremely short time.

### Embodiment 2

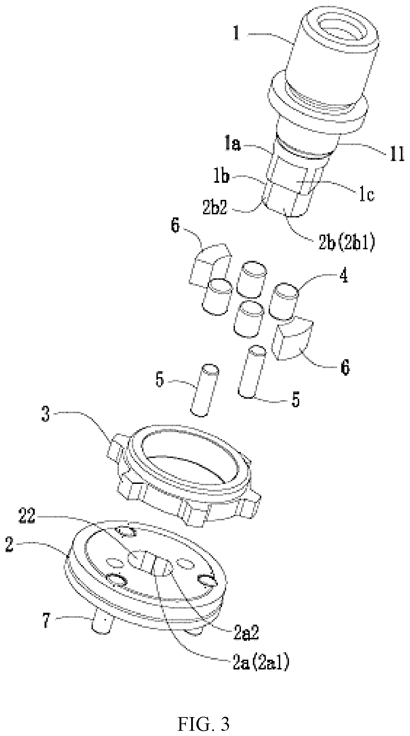

As shown in FIG. 1 and FIG. 3, this embodiment differs from Embodiment 1 in the following aspects: in this embodiment, a polygonal through hole 22 is formed in the center of the power output disk 2, and the power transmission section 1b serves as the polyhedral shaft and is inserted into the polygonal through hole 22, wherein the driving structure 2a has two V-shaped driving faces 2a1 disposed in the polygonal through hole 22, an arc transition face 2a2 is disposed between the two adjacent V-shaped driving faces 2a1, the driven structure 2b has two transmission planes 2b1 disposed on the power transmission section 1b in a circumferential direction, an arc transition face 2b2 is disposed between the two adjacent transmission planes 2b1, and the V-shaped driving faces 2a1 contact with the transmission planes 2b1. When the power output disk 2 rotates, the V-shaped driving faces 2a1 are engaged with the transmission planes 2b1, so that the output shaft 1 is driven by the power output disk 2 to rotate.

Other structures of this embodiment are identical with those of Embodiment 1 and will no longer be repeated here.

### Embodiment 3

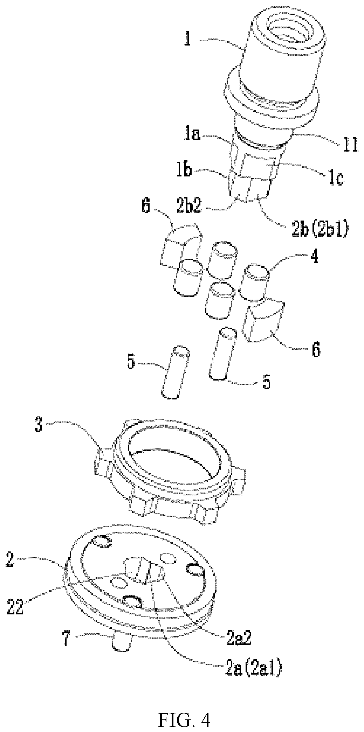

As shown in FIG. 1 and FIG. 4, this embodiment differs from Embodiment 1 in the following aspects: in this embodiment, a polygonal through hole 22 is formed in the center of the power output disk 2, and the power transmission section 1b serves as the polyhedral shaft and is inserted into the polygonal through hole 22, wherein the driving structure 2a has three V-shaped driving faces 2a1 disposed in the polygonal through hole 22, an arc transition face 2a2 is disposed between every two adjacent V-shaped driving faces 2a1, the driven structure 2b has three transmission planes 2b 1 disposed on the power transmission section 1b in a circumferential direction, an arc transition face 2b2 is disposed between every two adjacent transmission planes 2b1, and the V-shaped driving faces 2a1 contact with the transmission planes 2b1. When the power output disk 2 rotates, the V-shaped driving faces 2a1 are engaged with the transmission planes 2b1, so that the output shaft 1 is driven by the power output disk 2 to rotate.

Other structures of this embodiment are identical with those of Embodiment 1 and will no longer be repeated here.

### Embodiment 4

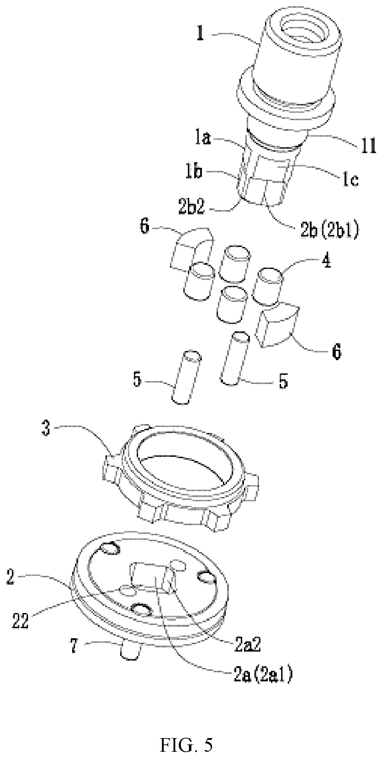

As shown in FIG. 1 and FIG. 5, this embodiment differs from Embodiment 1 in the following aspects: in this embodiment, a polygonal through hole 22 is formed in the center of the power output disk 2, and the power transmission section 1b serves as the polyhedral shaft and is inserted into the polygonal through hole 22, wherein the driving structure 2a has four transmission planes 2a1 disposed in the polygonal through hole 22, an arc transition face 2a2 is disposed between every two adjacent transmission planes 2a1, the driven structure 2b has four V-shaped driving faces 2b1 disposed on the power transmission section 1b in a circumferential direction, an arc transition face 2b2 is disposed between every two adjacent V-shaped driving faces 2b1, and the V-shaped driving faces 2a1 contact with the transmission planes 2b1. When the power output disk 2 rotates, the V-shaped driving faces 2a1 are engaged with the transmission planes 2b1, so that the output shaft 1 is driven by the power output disk 2 to rotate.

Other structures of this embodiment are identical with those of Embodiment 1 and will no longer be repeated here.

### Embodiment 5

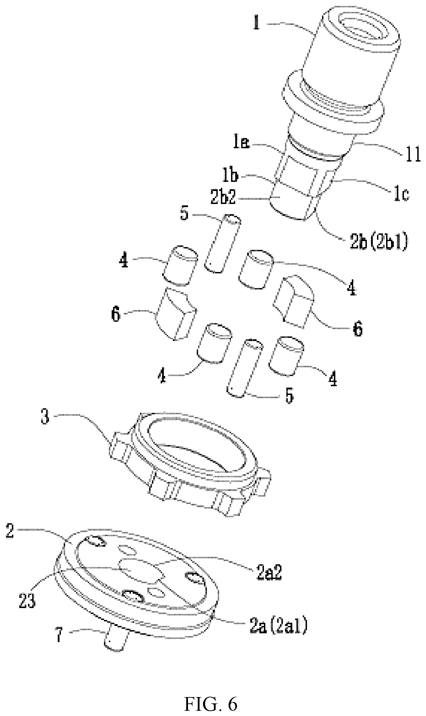

As shown in FIG. 1 and FIG. 6, this embodiment differs from Embodiment 1 in the following aspects: in this embodiment, a D-shaped through hole 23 is formed in the center of the power output disk 2, and the power transmission section 1b has a D-shaped cross-section and is inserted into the D-shaped through hole 23, wherein the driving structure 2a has a V-shaped driving face 2a1 disposed in the D-shaped through hole 22, the V-shaped driving face 2a1 is connected to an arc transition face 2a2, the driven structure 2b has a transmission plane 2b 1 disposed on the power transmission section 1b in a circumferential direction, the transmission plane 2b1 is connected to an arc transition face 2b2, and the V-shaped driving face 2a1 contacts with the transmission plane 2b1. When the power output disk 2 rotates, the V-shaped driving face 2a1 is engaged with the transmission plane 2b1, so that the output shaft 1 is driven by the power output disk 2 to rotate.

Other structures of this embodiment are identical with those of Embodiment 1 and will no longer be repeated here.

### Embodiment 6

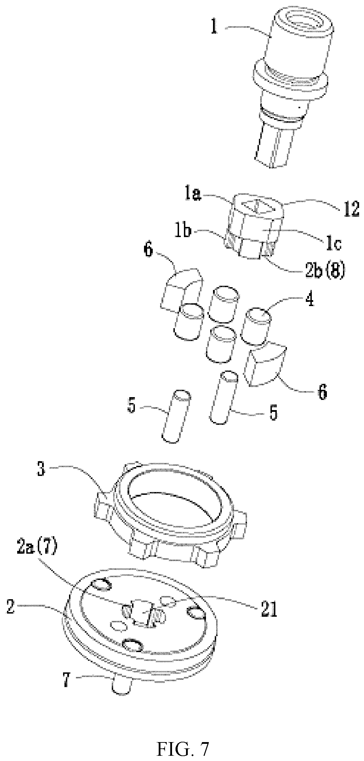

As shown in FIG. 1 and FIG. 7, a gapless spindle locking device of an improved structure comprises an output shaft 1, a power output disk 2, a stop ring 3 and lock pins 4, wherein the power output disk 2 is connected to a driving device, a polyhedral shaft sleeve 12 is disposed around one end of the output shaft 1 and has a lock section 1a and a power transmission section 1b, and lock planes 1c matched with the lock pins 4 are disposed on the lock section 1a in a circumferential direction; a driving structure 2a for transmitting power is disposed on the power output disk 2, a driven structure 2b for transmitting power is disposed on the power transmission section 1b, and the driving structure 2a is matched with the driven structure 2b; spacing pillars 5 protruding upwards are disposed on a surface of the power output disk 2 in a circumferential direction, a damping block 6 is disposed between every two adjacent spacing pillars 5, the lock pins 4 are disposed between the spacing pillars 5 and the damping blocks 6, the stop ring 3 is disposed on the power output disk 2, and the spacing pillars 5, the damping blocks 6 and the lock pins 4 are disposed in an inner circle of the stop ring 3 in a sleeved manner; the polyhedral shaft sleeve 12 penetrates through a center hole defined by the spacing pillars 6, the damping blocks 6 and the lock pins 4, as well as the power output disk 2, and the lock pins 4 contact with the lock planes 1c.

In this embodiment, a polyhedral shaft is disposed at one end of the output shaft 1, an inner cavity of the polyhedral shaft sleeve 12 is matched with the polyhedral shaft, and after the polyhedral shaft of the output shaft is inserted into the polyhedral shaft sleeve 12, the polyhedral shaft sleeve 12 and the output shaft are combined into a whole structure.

A through hole 21 is formed in the center of the power output disk 2, the driving structure 2a comprises ribs 7 disposed on an inner wall of the through hole 21, the driven structure 2b comprises grooves 8 formed in the power transmission section 1b in a circumferential direction, and the ribs 7 are embedded in the grooves 8. When the power output disk 2 rotates, power is transmitted by means of the ribs 7 and the grooves 8 to drive the output shaft 1 to rotate.

A connecting pillar 7 is disposed on a surface, connected to the driving device, of the power output disk 2. The connecting pillar 7 is integrated with the power output disk 2; or, an insertion hole is formed in the power output disk 2, and the connecting pillar 7 is inserted into the insertion hole to be fixed.

The spacing pillars 5 are integrated with the power output disk 2; or, insertion holes are formed in the power output disk 2, and the spacing pillars 5 are inserted into the insertion holes to be fixed.

Quick locking principle: when a gearbox stops suddenly, the buffering blocks 6 push the lock pins 4 out of the center of the lock planes 1c of the output shaft 1, so that the gaps between the lock pins 4 and the polyhedral shaft sleeve 12 as well as between the lock pins 4 and the stop ring 3 are very small to ensure that the output shaft 1 can stop rotating within an extremely short time.

### Embodiment 7

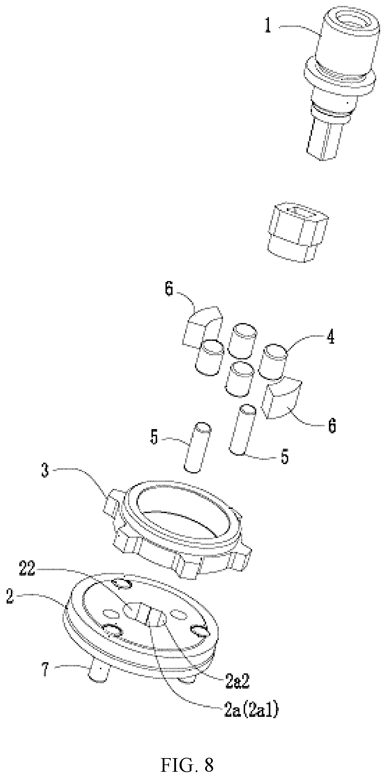

As shown in FIG. 1 and FIG. 8, this embodiment differs from Embodiment 6 in the following aspects: in this embodiment, a polygonal through hole 22 is formed in the center of the power output disk 2, and the power transmission section 1b serves as the polyhedral shaft and is inserted into the polygonal through hole 22, wherein the driving structure 2a has two V-shaped driving faces 2a1 disposed in the polygonal through hole 22, an arc transition face 2a2 is disposed between the two adjacent V-shaped driving faces 2a1, the driven structure 2b has two transmission planes 2b1 disposed on the power transmission section 1b in a circumferential direction, an arc transition face 2b2 is disposed between the two adjacent transmission planes 2b1, and the V-shaped driving faces 2a1 contact with the transmission planes 2b1. When the power output disk 2 rotates, the V-shaped driving faces 2a1 are engaged with the transmission planes 2b1, so that the output shaft 1 is driven by the power output disk 2 to rotate.

Other structures of this embodiment are identical with those of Embodiment 6 and will no longer be repeated here.

### Embodiment 8

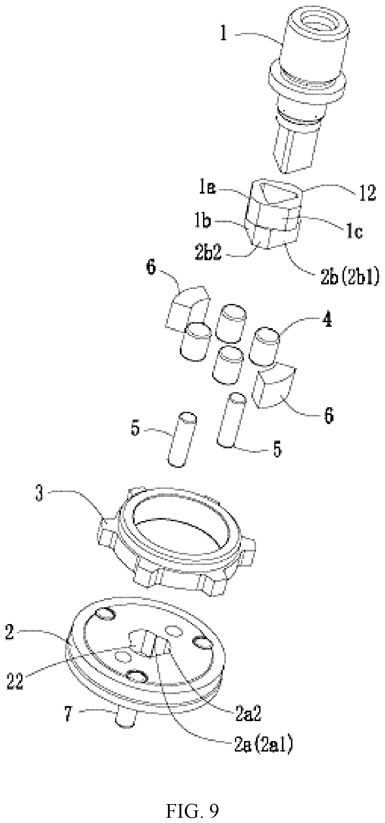

As shown in FIG. 1 and FIG. 9, this embodiment differs from Embodiment 6 in the following aspects: in this embodiment, a polygonal through hole 22 is formed in the center of the power output disk 2, and the power transmission section 1b serves as the polyhedral shaft and is inserted into the polygonal through hole 22, wherein the driving structure 2a has three V-shaped driving faces 2a1 disposed in the polygonal through hole 22, an arc transition face 2a2 is disposed between every two adjacent V-shaped driving faces 2a1, the driven structure 2b has three transmission planes 2b 1 disposed on the power transmission section 1b in a circumferential direction, an arc transition face 2b2 is disposed between every two adjacent transmission planes 2b1, and the V-shaped driving faces 2a1 contact with the transmission planes 2b1. When the power output disk 2 rotates, the V-shaped driving faces 2a1 are engaged with the transmission planes 2b1, so that the output shaft 1 is driven by the power output disk 2 to rotate.

Other structures of this embodiment are identical with those of Embodiment 6 and will no longer be repeated here.

### Embodiment 9

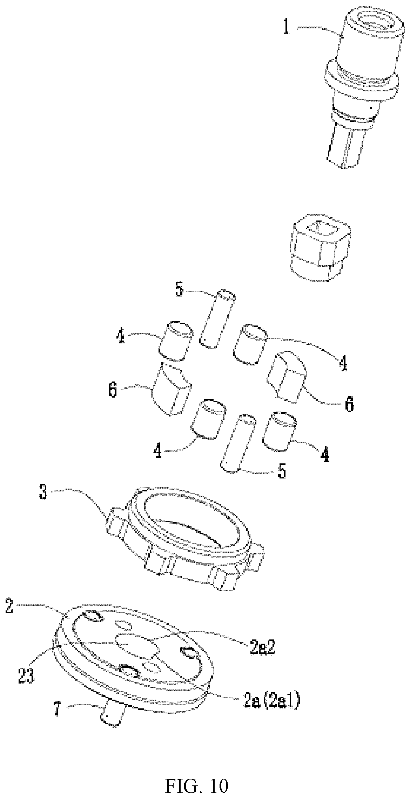

As shown in FIG. 1 and FIG. 10, this embodiment differs from Embodiment 6 in the following aspects: in this embodiment, a D-shaped through hole 23 is formed in the center of the power output disk 2, and the power transmission section 1b has a D-shaped cross-section and is inserted into the D-shaped through hole 23, wherein the driving structure 2a has a V-shaped driving face 2a1 disposed in the D-shaped through hole 23, the V-shaped driving face 2a1 is connected to an arc transition face 2a2, the driven structure 2b has a transmission plane 2b1 disposed on the power transmission section 1b in a circumferential direction, the transmission plane 2b1 is connected to an arc transition face 2b2, and the V-shaped driving face 2a1 contacts with the transmission plane 2b1. When the power output disk 2 rotates, the V-shaped driving face 2a1 is engaged with the transmission plane 2b1, so that the output shaft 1 is driven by the power output disk 2 to rotate.

Other structures of this embodiment are identical with those of Embodiment 6 and will no longer be repeated here.

### Embodiment 10

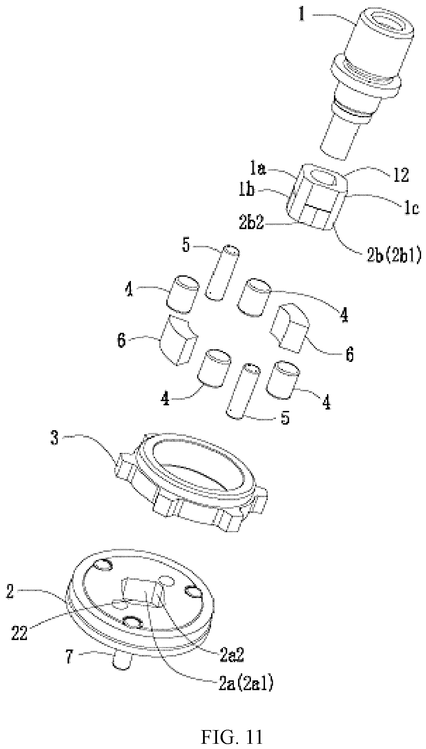

As shown in FIG. 1 and FIG. 11, this embodiment differs from Embodiment 6 in the following aspects: in this embodiment, a polygonal through hole 22 is formed in the center of the power output disk 2, and the power transmission section 1b serves as the polyhedral shaft and is inserted into the polygonal through hole 22, wherein the driving structure 2a has four transmission planes 2a1 disposed in the polygonal through hole 22, an arc transition face 2a2 is disposed between every two adjacent transmission planes 2a1, the driven structure 2b has four V-shaped driving faces 2b1 disposed on the power transmission section 1b in a circumferential direction, an arc transition face 2b2 is disposed between every two adjacent V-shaped driving faces 2b1, and the V-shaped driving faces 2a1 contact with the transmission planes 2b1. When the power output disk 2 rotates, the V-shaped driving faces 2a1 are engaged with the transmission planes 2b1, so that the output shaft 1 is driven by the power output disk 2 to rotate.

Other structures of this embodiment are identical with those of Embodiment 6 and will no longer be repeated here.

Feasible embodiments of the invention are specifically expounded above, but these embodiments are not intended to limit the patent scope of the invention. All equivalent implementations or transformations obtained without departing from the spirit of the invention should also fall within the protection scope of the invention.

## Claims

1. A gapless spindle locking device of an improved structure, comprising an output shaft, a power output disk, a stop ring and lock pins, the power output disk being connected to a driving device, wherein a polyhedral shaft is disposed at one end of the output shaft and has a lock section and a power transmission section, and lock planes matched with the lock pins are disposed on the lock section in a circumferential direction; a driving structure for transmitting power is disposed on the power output disk, a driven structure for transmitting power is disposed on the power transmission section, and the driving structure is matched with the driven structure; spacing pillars protruding upwards are disposed on a surface of the power output disk in a circumferential direction, a damping block is disposed between every two adjacent said spacing pillars, the lock pins are disposed between the spacing pillars and the damping blocks, the stop ring is disposed on the power output disk, and the spacing pillars, the damping blocks and the lock pins are disposed in an inner circle of the stop ring in a sleeved manner; the polyhedral shaft penetrates through a center hole defined by the spacing pillars, the damping blocks and the lock pins, as well as the power output disk, and the lock pins contact with the lock planes.

2. The gapless spindle locking device of an improved structure according to Claim 1, wherein a through hole is formed in a center of the power output disk, the driving structure comprises ribs disposed on an inner wall of the through hole, the driven structure comprises grooves formed in the power transmission section in a circumferential direction, and the ribs are embedded in the grooves.

3. The gapless spindle locking device of an improved structure according to Claim 1, wherein a polygonal through hole is formed in a center of the power output disk, and the power transmission section serves as the polyhedral shaft and is inserted into the polygonal through hole; wherein, the driving structure has two V-shaped driving faces disposed in the polygonal through hole, an arc transition face is disposed between the two adjacent V-shaped driving faces, the driven structure has two transmission planes disposed on the power transmission section in a circumferential direction, an arc transition face is disposed between the two adjacent transmission planes, and the V-shaped driving faces contact with the transmission planes or
wherein, the driving structure has three V-shaped driving faces disposed in the polygonal through hole, an arc transition face is disposed between every two adjacent said V-shaped driving faces, the driven structure has three transmission planes disposed on the power transmission section in a circumferential direction, an arc transition face is disposed between every two adjacent said transmission planes, and the V-shaped driving faces contact with the transmission planes or wherein, the driving structure has four transmission planes disposed in the polygonal through hole, an arc transition face is disposed between every two adjacent transmission planes, the driven structure has four V-shaped driving faces disposed on the power transmission section in a circumferential direction, an arc transition face is disposed between every two adjacent said V-shaped driving faces, and the V-shaped driving faces contact with the transmission planes.

4. The gapless spindle locking device of an improved structure according to Claim 1, wherein a D-shaped through hole is formed in a center of the power output disk, and the power transmission section has a D-shaped cross-section and is inserted into the D-shaped through hole; wherein, the driving structure has a V-shaped driving face disposed in the D-shaped through hole, the V-shaped driving face is connected to an arc transition face, the driven structure has a transmission plane disposed on the power transmission section in a circumferential direction, the transmission plane is connected to an arc transition face, and the V-shaped driving face contacts with the transmission plane.

5. The gapless spindle locking device of an improved structure according to any of the preceding Claims, wherein a connecting pillar is disposed on a surface, connected to the driving device, of the power output disk.

6. The gapless spindle locking device of an improved structure according to Claim 5, wherein second insertion holes are formed in the power output disk, and the spacing pillars are cylinders and are inserted and fixed in the second insertion holes.

7. The gapless spindle locking device of an improved structure according to Claim 5, wherein the spacing pillars are integrated with the power output disk.

8. A gapless spindle locking device of an improved structure, comprising an output shaft, a power output disk, a stop ring and lock pins, the power output disk being connected to a driving device, wherein a polyhedral shaft sleeve is disposed around one end of the output shaft and has a lock section and a power transmission section, and lock planes matched with the lock pins are disposed on the lock section in a circumferential direction; a driving structure for transmitting power is disposed on the power output disk, a driven structure for transmitting power is disposed on the power transmission section, and the driving structure is matched with the driven structure; spacing pillars protruding upwards are disposed on a surface of the power output disk in a circumferential direction, a damping block is disposed between every two adjacent said spacing pillars, the lock pins are disposed between the spacing pillars and the damping blocks, the stop ring is disposed on the power output disk, and the spacing pillars, the damping blocks and the lock pins are disposed in an inner circle of the stop ring in a sleeved manner; the polyhedral shaft sleeve penetrates through a center hole defined by the spacing pillars, the damping blocks and the lock pins, as well as the power output disk, and the lock pins contact with the lock planes.

9. The gapless spindle locking device of an improved structure according to Claim 8, wherein a polyhedral shaft is disposed at one end of the output shaft, and an inner cavity of the polyhedral shaft sleeve is matched with the polyhedral shaft.

10. The gapless spindle locking device of an improved structure according to Claim 8, wherein a through hole is formed in a center of the power output disk, the driving structure comprises ribs disposed on an inner wall of the through hole, the driven structure comprises grooves formed in the power transmission section in a circumferential direction, and the ribs are embedded in the grooves.

11. The gapless spindle locking device of an improved structure according to Claim 8, wherein a polygonal through hole is formed in a center of the power output disk, and the power transmission section has multiple connecting faces and is inserted into the polygonal through hole; wherein, the driving structure has two V-shaped driving faces disposed in the polygonal through hole, an arc transition face is disposed between the two adjacent V-shaped driving faces, the driven structure has two transmission planes disposed on the power transmission section in a circumferential direction, an arc transition face is disposed between the two adjacent transmission planes, and the V-shaped driving faces contact with the transmission planes or
wherein, the driving structure has three V-shaped driving faces disposed in the polygonal through hole, an arc transition face is disposed between every two adjacent said V-shaped driving faces, the driven structure has three transmission planes disposed on the power transmission section in a circumferential direction, an arc transition face is disposed between every two adjacent said transmission planes, and the V-shaped driving faces contact with the transmission planes or. wherein, the driving structure has four transmission planes disposed in the polygonal through hole, an arc transition face is disposed between every two adjacent said transmission planes, the driven structure has four V-shaped driving faces disposed on the power transmission section in a circumferential direction, an arc transition face is disposed between every two adjacent said V-shaped driving faces, and the V-shaped driving faces contact with the transmission planes.

12. The gapless spindle locking device of an improved structure according to Claim 8, wherein a D-shaped through hole is formed in a center of the power output disk, and the power transmission section has a D-shaped cross-section and is inserted into the polygonal through hole; wherein, the driving structure has a V-shaped driving face disposed in the D-shaped through hole, the V-shaped driving face is connected to an arc transition face, the driven structure has a transmission plane disposed on the power transmission section in a circumferential direction, the transmission plane is connected to an arc transition face, and the V-shaped driving face contacts with the transmission plane.

13. The gapless spindle locking device of an improved structure according to any of the Claims 8 to 12, wherein a connecting pillar is disposed on a surface, connected to the driving device, of the power output disk.

14. The gapless spindle locking device of an improved structure according to Claim 13, wherein second insertion holes are formed in the power output disk, and the spacing pillars are cylinders and are inserted and fixed in the second insertion holes.

15. The gapless spindle locking device of an improved structure according to Claim 13, wherein the spacing pillars are integrated with the power output disk.
